# EUROPÄISCHE PATENTSCHRIFT

(11) **EP 2 050 637 B1**
(45) Veröffentlichungstag und Bekanntmachung des Hinweises auf die Patenterteilung: **31.07.2013**
(21) Anmeldenummer: 08016949.3
(22) Anmeldetag: 26.09.2008
(51) Int. Cl.: B60S 1/08, G01S 3/783, B60Q 1/00, B60W 30/08

(54) **Sensormodul und Betriebsverfahren hierfür**
Sensor module and operating procedure therefor
Module de capteur et son procédé de fonctionnement

(30) Priorität: 18.10.2007 DE 102007049877
(43) Veröffentlichungstag der Anmeldung: 22.04.2009
(73) Patentinhaber: Valeo Schalter und Sensoren GmbH, 74321 Bietigheim-Bissingen (DE)
(72) Erfinder: Schenk, Jochen, 74255 Roegheim (DE); Bayha, Heiner, 71665 Vaihingen an der Enz (DE); Schuler, Thomas, 75446 Wiernsheim (DE); Horvath, Peter, 74392 Freudental (DE)
(74) Vertreter: Pothmann, Karsten

(56) Entgegenhaltungen:
- EP-A1- 1 357 393
- EP-A2- 1 580 092
- EP-A2- 1 935 681
- WO-A1-03/045734
- WO-A1-2006/015905
- DE-A1-102004 055 060
- US-A1- 2005 133 080

## Beschreibung

Die Erfindung betrifft ein Sensormodul mit einer Regensensoreinheit zur Erkennung von Regentropfen und/oder Feuchtigkeit, insbesondere im Bereich einer Windschutzscheibe eines Kraftfahrzeugs.

Die Erfindung betrifft ferner ein Betriebsverfahren für ein derartiges Sensormodul.

Solche Sensormodule und Betriebsverfahren sind bekannt und werden insbesondere im Kraftfahrzeugbereich eingesetzt, wobei das Sensormodul häufig direkt an der Windschutzscheibe, z.B. im Bereich eines Rückspiegels, angebracht ist.

Aus der WO 2006/015905 A1 ist bereits ein optisches Modul für ein Fahrzeug mit einem Halbleiterelement bekannt, das eine Vielzahl von Pixeln aufweist, wobei eine erste Gruppe von Pixeln zur Erfassung eines Außenvorraums des Fahrzeugs und eine zweite Gruppe von Pixeln zur Erfassung von Regen auf einer Windschutzscheibe vorgesehen ist. Das Modul umfasst eine Optik, um Außenvorraum und Windschutzscheibe jeweils scharf auf der zugehörigen Gruppe von Pixeln abzubilden.

In der DE 10 2004 055 060 A1 wird eine Sensoreinrichtung für ein Fahrzeug mit einem Lichtleitkörper und zwei Empfängern vorgeschlagen, um die Richtung einer Sonneneinstrahlung zu ermitteln.

Die EP 1 935 681 A1 betrifft ein Sensorsystem mit einem Regensensor, das dazu ausgelegt ist, eine Wärmemenge in der Umgebung eines Fahrzeugs zu detektieren. Dabei sind mehrere Empfänger vorgesehen, um Richtung einer Sonneneinstrahlung zu ermitteln.

Es ist Aufgabe der vorliegenden Erfindung, ein Sensormodul der vorstehend genannten Art und ein zugehöriges Betriebsverfahren dahingehend zu verbessern, dass ein gesteigerter Gebrauchsnutzen gegeben ist.

Diese Aufgabe wird bei einem Sensormodul der eingangs genannten Art erfindungsgemäß dadurch gelöst, dass in das Sensormodul ein optischer Richtungssensor integriert ist, der dazu ausgebildet ist, eine Einfallsrichtung von auf den Richtungssensor auftreffenden elektromagnetischen Wellen, insbesondere Lichtstrahlen, zu ermitteln.

Der optische Richtungssensor kann hierzu beispielsweise ein oder mehrere Arrays von Photodioden aufweisen, die durch Masken derart vor einfallender Strahlung abgeschattet werden, dass je nach Einstrahlrichtung unterschiedliche Teilmengen der Photodioden bestrahlt werden. Ein derartiger optischer Richtungssensor ist beispielsweise aus der DE 102 18 160 C1 bekannt.

Die erfindungsgemäße Integration eines derartigen optischen Richtungssensors steigert den Gebrauchsnutzen herkömmlicher Regensensormodule erheblich und vereinfacht durch die bauliche Zusammenanordnung der Komponenten auch deren Einbau bzw. Anbringung in Zielsystemen wie z.B. einem Kraftfahrzeug.

Ein besonders klein bauendes Sensormodul kann erfindungsgemäß dadurch erzielt werden, dass eine Sensorfläche der Regensensoreinheit und eine Sensorfläche des Richtungssensors in derselben Ebene, insbesondere im Bereich einer Oberfläche eines Gehäuses des Sensormoduls, angeordnet sind. Durch einen zumindest teilweise übereinstimmenden Erfassungsbereich ist bei dieser Erfindungsvariante ferner der Vorteil gegeben, dass ein Regensensor vom optischen Typ seine erfassten Signale zumindest teilweise mit denen des optischen Richtungssensors plausibilisieren kann. Hierzu können z.B. die Signale von in den Sensoren enthaltenen Photodioden derart miteinander verglichen werden, dass Tageslicht oder ein darin enthaltener Infrarotanteil von beiden Sensoren erkannt wird, usw.

Besonders vorteilhaft kann ferner vorgesehen sein, dass das erfindungsgemäße Sensormodul integrierbar ist in einen Spiegelfuß und/oder eine Halteplatte eines an der Windschutzscheibe anzubringenden Spiegels, so dass eine unauffällige Anbringung im Kraftfahrzeug möglich ist.

Eine besonders präzise und flexible Datenerfassung durch das erfindungsgemäße Sensormodul ist dann gegeben, wenn der Richtungssensor dazu ausgebildet ist, die Richtung einfallender Lichtstrahlen in mindestens zwei, vorzugsweise zueinander im Wesentlichen senkrechten, Ebenen zu ermitteln. Die Ebenen erstrecken sich bei Anwendungen im Kraftfahrzeugbereich bevorzugt parallel zu einer Fahrbahnebene und senkrecht hierzu entlang einer Fahrzeuglängsachse. Auf diese Weise kann das erfindungsgemäße Sensormodul erfassen, ob sich eine detektierte Lichtquelle rechts bzw. links von der Fahrzeugmitte befindet, und in welcher Höhe bezogen auf die Fahrbahnebene die Lichtquelle angeordnet ist.

Der Richtungssensor ist gemäß der Erfindung dazu ausgebildet, einen zeitlichen Verlauf der Richtung einfallender Lichtstrahlen zu ermitteln, wodurch mindestens eine Trajektorie einer die Lichtstrahlen aussenden Lichtquelle erhalten wird.

Auf diese Weise können bei geeigneter Auswertung der Trajektorien - z.B. durch einen Vergleich mittels vorgebbarer Referenzdaten - beispielsweise entgegenkommende Fahrzeuge und deren Fahrtrichtung usw. ermittelt werden.

Speziell kann das Sensormodul und/oder der Richtungssensor dazu ausgebildet sein, in Abhängigkeit der Auswertung der Trajektorie darauf zu schließen, dass es sich bei der Lichtquelle um ein entgegenkommendes, insbesondere auf Kollisionskurs befindliches, Fahrzeug und/oder ein vorbeifahrendes Fahrzeug und/oder um stationäre Objekte wie z.B. Fahrbahnbeleuchtungen und/oder Verkehrsschilder handelt.

Die Ergebnisse der Auswertung können vorteilhaft mit Daten weiterer Systeme des Kraftfahrzeugs, insbesondere mit Lenkwinkeldaten und/oder Geschwindigkeitsdaten und/oder Abstandsdaten eines Hinderniserfassungssystems und dergleichen abgeglichen und/oder plausibilisiert werden.

In Abhängigkeit der Ergebnisse der Auswertung kann vorteilhaft auch ein System zur Leuchtweitenregulierung und/oder ein Fernlicht angesteuert werden.

Die Auswertung der durch den Richtungssensor erfassten Daten kann auch zeitlich diskret erfolgen, so dass keine Trajektorien sondern nur einzelne Richtungskoordinaten verarbeitet werden. Diese Art der Auswertung ist z.B. zur Steuerung eines Fernlichts/Abblendlichts oder zur Regulierung der Leuchtweite von Scheinwerfern eines Kraftfahrzeugs völlig ausreichend und erfordert eine geringere Rechenleistung als die Bildung und Analyse von Trajektorien.

Ganz besonders vorteilhaft kann ferner vorgesehen sein, dass der Richtungssensor und/oder der Regensensor dazu ausgebildet ist, Signale eines auf Infrarotstrahlung basierenden Fernbedienungssenders zu empfangen und/oder auszuwerten, so dass der bei herkömmlichen Systemen wie z.B. Zentralverriegelungsanlagen separate IR-Empfänger entfallen kann.

Als eine weitere Lösung der Aufgabe der vorliegenden Erfindung ist ein Betriebsverfahren gemäß Patentanspruch 12 angegeben.

Vorteilhafte Ausgestaltungen der Erfindung sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

In der Zeichnung zeigt:
- Figur 1: schematisch ein Blockdiagramm eines erfindungsgemäßen Sensormoduls,
- Figur 2: eine perspektivische Ansicht einer Ausführungsform des erfindungsgemäßen Sensormoduls,
- Figur 3: ein Anwendungsszenario des erfindungsgemäßen Sensormoduls, und
- Figur 4: erfindungsgemäß erhaltene Trajektorien von detektierten Lichtquellen.

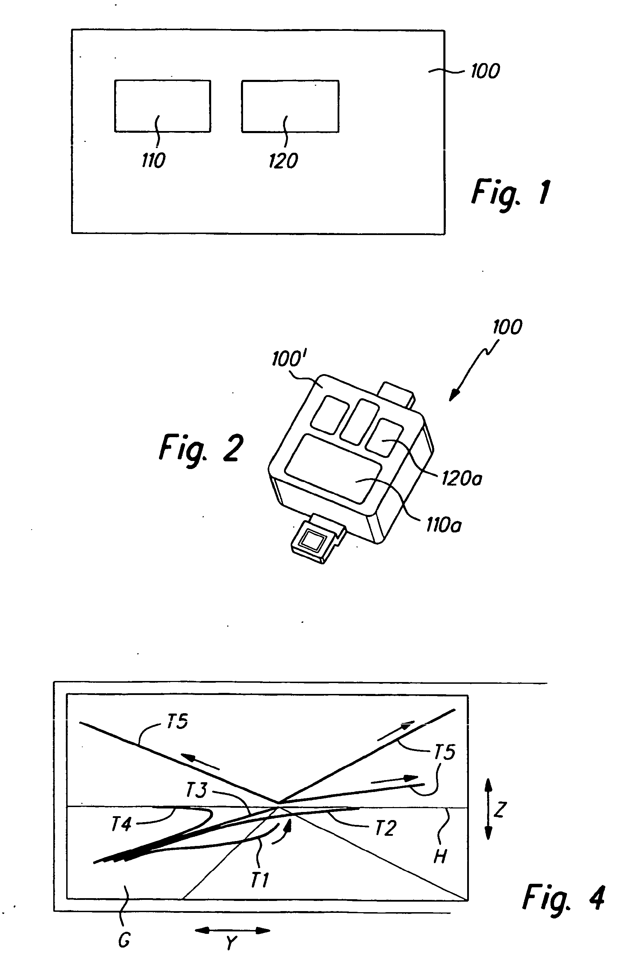

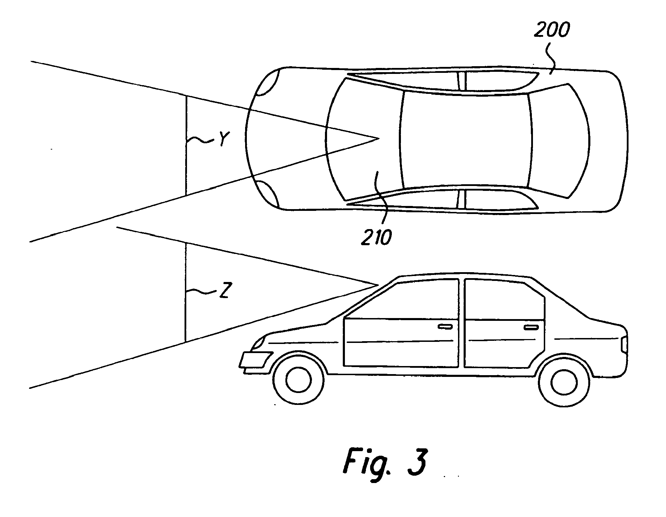

Figur 1 zeigt schematisch ein Blockdiagramm eines erfindungsgemäßen Sensormoduls 100. Das Sensormodul 100 verfügt über eine vorzugsweise optisch arbeitende Regensensoreinheit 110, die bei einer Anbringung des Sensormoduls 100 im Bereich einer Windschutzscheibe 210 (Figur 3) eines Kraftfahrzeugs 200 die Erkennung von Regentropfen und/oder Feuchtigkeit auf der Windschutzscheibe 210 ermöglicht.

Das Sensormodul 100 ist vorzugsweise in einen Fuß eines Innenspiegels (nicht gezeigt) des Kraftfahrzeugs 200 integriert und auf diese Weise besonders nahe und gleichzeitig optisch unauffällig im Bereich der Windschutzscheibe 210 angeordnet.

Erfindungsgemäß ist in das Sensormodul 100 auch ein optischer Richtungssensor 120 (Figur 1) integriert, der dazu ausgebildet ist, eine Einfallsrichtung von auf den Richtungssensor 120 auftreffenden elektromagnetischen Wellen, insbesondere Lichtstrahlen, zu ermitteln.

Ein derartiger optischer Richtungssensor 120 ist beispielsweise aus der DE 102 18 160 C1 bekannt.

Der optische Richtungssensor 120 verfügt z.B. über ein oder mehrere Arrays von Photodioden, die durch Masken derart vor einfallender Strahlung abgeschattet werden, dass je nach Einstrahlrichtung jeweils unterschiedliche Teilmengen der Photodioden bestrahlt werden. Eine zu dem Einstrahlwinkel proportionale Größe kann beispielsweise in Form eines analogen oder digitalen Signals durch den optischen Richtungssensor 120 bereitgestellt werden. Eine interne Verarbeitung der erhaltenen Signale in dem Richtungssensor 120, z.B. durch eine darin integrierte Recheneinheit, ist ebenfalls denkbar. Das erfindungsgemäße Sensormodul 100 kann vorteilhaft auch über eine gemeinsame Auswerteinheit (nicht gezeigt) verfügen, die den Betrieb beider Einheiten 110, 120 steuert und hiervon erhaltene Signale auswertet.

Bei dem vorliegenden Ausführungsbeispiel, das durch die Draufsicht und die Seitenansicht auf ein mit dem erfindungsgemäßen Sensormodul 100 (Figur 1) ausgestattetes Kraftfahrzeug 200 in Figur 3 veranschaulicht ist, ist der optische Richtungssensor 120 so ausgebildet, dass er die Richtung einfallender Lichtstrahlen in mindestens zwei, vorzugsweise zueinander im Wesentlichen senkrechten, Ebenen ermitteln kann. Dies ist in Figur 3 durch die entsprechenden Winkelbereiche Y in einer Ebene parallel zur Fahrbahnebene und Z in einer Ebene senkrecht zur Fahrbahnebene und im wesentlichen parallel zur Fahrzeuglängsachse veranschaulicht.

Durch diese Konfiguration kann das erfindungsgemäße Sensormodul 100 beziehungsweise der darin enthaltene optische Richtungssensor 120 die Richtung einfallender Lichtstrahlen und damit vorteilhaft auch eine entsprechende Richtung der betreffenden Lichtquelle in den zwei Dimensionen Y, Z angeben.

Darüberhinaus kann der Richtungssensor 120 vorteilhaft auch dazu gebildet sein, einen zeitlichen Verlauf der Richtung einfallender Lichtstrahlen zu ermitteln, wodurch die in Figur 4 beispielhaft abgebildeten Trajektorien T1, .., T5 erhalten werden. Die Trajektorien T1 bis T5 sind entsprechend den von dem optischen Richtungssensor 120 erfassbaren Winkelbereichen Y, Z gemäß Figur 3 in Figur 4 in einer Y-Z-Ebene abgebildet.

Durch eine entsprechende Auswertung der Trajektorien T1 bis T5 kann vorteilhaft beispielsweise darauf geschlossen werden, dass eine detektierte Lichtquelle als Fahrbahnbeleuchtung und/ oder Verkehrsschild ausgebildet ist, oder auch als entgegenkommendes Fahrzeug.

Beispielsweise handelt es sich bei den Trajektorien T5 aus Figur 4, die im Wesentlichen Geraden darstellen, um die "Bahnkurven" von stationären Lichtquellen, denen sich das betrachtete Kraftfahrzeug 200 (Figur 3) im Rahmen einer Geradeausfahrt nähert. Wie aus Figur 4 durch die den Trajektorien T5 zugeordneten Richtungspfeile ersichtlich, beginnen die den stationären Objekten wie beispielsweise Fahrbahnbeleuchtungen und/oder Verkehrsschildern zugeordneten Bahnkurven ausgehend von der Mitte der in Figur 4 abgebildeten Y-Z-Ebene und erstrecken sich davon ausgehend in den oberen Halbraum der abgebildeten Y-Z-Ebene.

Wie in Figur 4 abgebildet, kann auch eine Horizontmarkierung H bei einer entsprechenden Z-Koordinate eingeführt werden, um die erfindungsgemäße Auswertung der Trajektorien zu vereinfachen.

Bei der Trajektorie T1, die sich in Figur 4 von links unten bis hin in die Mitte der Y-Z-Ebene erstreckt, handelt es sich um die Bahnkurve eines weiteren Kraftfahrzeugs, das an dem mit dem erfindungsgemäßen Sensormodul 100 ausgestatteten Kraftfahrzeug 200 in Rahmen eines Überholvorgangs vorbeigefahren ist.

Die weitere in Figur 4 abgebildete Trajektorie T2 kann mit dem erfindungsgemäßen optischen Richtungssensor 120 dann erhalten werden, wenn sich dem Kraftfahrzeug 200 ein entgegenkommendes Fahrzeug mit entsprechenden Lichtquellen von vorne rechts nähert.

Die in Figur 4 abgebildete Trajektorie T3 ergibt sich erfindungsgemäß beispielsweise dann, wenn sich dem Kraftfahrzeug 200 ein Kraftfahrzeug auf der Gegenfahrbahn G nähert.

Ein weiterer Typ von Trajektorie, die Trajektorie T4, kann darüberhinaus dann erhalten werden, wenn sich dem Kraftfahrzeug 200 ein entgegenkommendes Fahrzeug von vorne links nähert.

Je nach Empfindlichkeit und Orts- bzw. Winkelauflösung des erfindungsgemäßen optischen Richtungssensors 120 können die Trajektorien anstelle der in Figur 4 beispielhaft abgebildeten einzelnen Linien auch mehrere parallele Linien aufweisen, die beispielsweise ein Frontscheinwerferpaar eines entgegenkommenden Fahrzeugs oder sonstige erfasste Lichtquellen repräsentieren.

Eine Auswertung der erfindungsgemäß erhaltenen Trajektorien T1 bis T5 kann vorteilhaft direkt in dem erfindungsgemäßen Sensormodul 100 oder auch in einer weiteren Steuereinheit des Kraftfahrzeugs 200 vorgenommen werden, die mit dem erfindungsgemäßen Sensormodul 100 beispielsweise über einen CAN-Bus, ein Funknetzwerk mit ZigBee-Transceivern oder dergleichen verbunden ist.

Die Erkennung der im Wesentlichen Geradenform aufweisenden Trajektorien T5 ist - ausgehend von einem Bild der Y-Z-Ebene gemäß Figur 4 - beispielsweise durch Anwendung einer Hough-Transformation, die zur Geradenerkennung dient, möglich. Sofern die erfindungsgemäß ermittelten Richtungsdaten z.B. in Form eines 2-Tupels von Winkelwerten (Y, Z) erhalten werden, können auch direkt diese Winkeldaten bzw. mehrere solcher 2-Tupel ausgewertet werden, um die Geradenform zu erkennen.

Das erfindungsgemäße Sensormodul 100 kann insbesondere auch eine Auswertung von Trajektorien derart durchführen, um festzustellen, ob sich ein entgegenkommendes Fahrzeug auf Kollisionskurs mit dem Kraftfahrzeug 200 nähert.

Die erfindungsgemäß durch das Sensormodul 100 erhaltenen Daten können vorteilhaft mit Daten weiterer Systeme des Kraftfahrzeugs 200, insbesondere mit Lenkwinkeldaten und/oder Geschwindigkeitsdaten und/oder Abstandsdaten eines Hinderniserfassungssystems und dergleichen abgeglichen beziehungsweise plausibilisiert werden.

Ganz besonders vorteilhaft kann das erfindungsgemäße Sensormodul 100 in Abhängigkeit der Ergebnisse der Auswertung der Trajektorien ein System zur Leuchtweitenregulierung und/ oder ein Fernlicht ansteuern, sodass bei dem Betrieb der Scheinwerfer das Kraftfahrzeugs 200 in Abhängigkeit der jeweiligen Verkehrssituation die Blendung entgegenkommender Fahrzeuge ausgeschlossen werden kann.

Die Auswertung der durch den Richtungssensor 120 erfassten Daten kann vorteilhaft auch zeitlich diskret erfolgen, so dass keine Trajektorien sondern nur einzelne Richtungskoordinatenwerte verarbeitet werden. Diese Art der Auswertung ist z.B. zur Steuerung des Fernlichts/Abblendlichts oder zur Regulierung der Leuchtweite von Scheinwerfern des Kraftfahrzeugs 200 völlig ausreichend und erfordert eine geringere Rechenleistung als die Bildung und Analyse von Trajektorien.

Da der optische Richtungssensor 120 üblicherweise eine verhältnismäßig große Empfindlichkeit gegenüber Lichtstrahlung mit einer Wellenlänge im sichtbaren Bereich aufweist, kann der erfindungsgemäße Richtungssensor 120 vorteilhaft generell auch dazu verwendet werden, ein Helligkeitssignal wie beispielsweise eine Umgebungshelligkeit zu erfassen. Auch dieses die Umgebungshelligkeit repräsentierende Signal kann mit vergleichbaren Signalen anderer Sensoren beziehungsweise Sensorsysteme des Kraftfahrzeug 200 abgeglichen werden.

Ganz besonders vorteilhaft kann der erfindungsgemäße optische Richtungssensor 120 oder auch der Regensensor 110 dazu ausgebildet sein, Signale eines auf Infrarotstrahlung basierenden Fernbedienungssenders zu empfangen und/oder auszuwerten. Derartige Infrarot-Signale werden üblicherweise bei Zentralverriegelungssystemen von Kraftfahrzeugen verwendet und erfordern üblicherweise einen separaten Infrarot-Empfänger, der im Bereich des Kraftfahrzeugs angeordnet ist.

Da das erfindungsgemäße Sensormodul 100 auf Grund seiner Funktionalität bezüglich der Regendetektion in den meisten Anwendungsfällen im Bereich der Windschutzscheibe 210 des Kraftfahrzeugs 200 angeordnet sein wird, kann die vorstehend beschriebene Auswertung von Infrarot-Signalen ebenfalls zweckmäßig mit einem großen Erfassungsbereich durchgeführt werden.

Anstelle einer Ermittlung der in Figur 4 beispielhaft dargestellten Trajektorien T1 bis T5 kann das erfindungsgemäße Sensormodul 100 beziehungsweise der darin enthaltene optische Richtungssensor 120 - wie bereits erwähnt - beispielsweise auch nur diskrete Richtungswerte in der Y-Z-Ebene erfassen, und die entsprechenden Punkte der Y-Z-Ebene werden anschließend beispielsweise mit dem Ziel einer Scheinwerfersteuerung oder einer Kollisionsdetektion ausgewertet. Die Abbildung der ermittelten Daten in Bildern eines kamerabasierten Fahrerassistenzsystems ist ebenfalls denkbar.

Figur 2 zeigt perspektivisch eine Ausführungsform des erfindungsgemäßen Sensormoduls 100, bei der eine Sensorfläche 110a der Regensensoreinheit 110 und eine Sensorfläche 120a des Richtungssensors 120 im Wesentlichen in derselben Ebene, insbesondere im Bereich einer Oberfläche des Gehäuses 100' des Sensormoduls 100 angeordnet sind.

Erfindungsgemäß kann ferner vorteilhaft vorgesehen sein, dass das Sensormodul 100 integrierbar ist in einen Spiegelfuß und/oder eine Halteplatte eines an der Windschutzscheibe 210 (Figur 3) des Kraftfahrzeugs 200 anbringbaren Rückspiegels.

Das erfindungsgemäße Sensormodul 100 kann auch in anderen Anwendungsbereichen, z.B. in der Prozesstechnik oder in sonstigen Bereichen eingesetzt werden.

Bei einem entsprechend großen Wertebereich für die beiden Erfassungsrichtungen Y, Z kann der erfindungsgemäße optische Richtungssensor 120 auch zur Ermittlung des Sonnenstandes verwendet werden, beispielsweise um eine Klimaautomatik des Kraftfahrzeugs 200 entsprechend zu regeln.

## Patentansprüche

1. Sensormodul (100) mit einer Regensensoreinheit (110) zur Erkennung von Regentropfen und/oder Feuchtigkeit, insbesondere im Bereich einer Windschutzscheibe (210) eines Kraftfahrzeugs (200), wobei in das Sensormodul (100) ein optischer Richtungssensor (120) integriert ist, der dazu ausgebildet ist, eine Einfallsrichtung von auf den Richtungssensor (120) auftreffenden elektromagnetischen Wellen, insbesondere Lichtstrahlen, zu ermitteln, **dadurch gekennzeichnet, dass** der Richtungssensor (120) dazu ausgebildet ist, einen zeitlichen Verlauf der Richtung einfallender Lichtstrahlen zu ermitteln, wodurch mindestens eine Trajektorie (T1, .., T5) einer die Lichtstrahlen aussendenden Lichtquelle erhalten wird, und das Sensormodul (100) und/oder der Richtungssensor (120) dazu ausgebildet ist, die Trajektorie (T1, .., T5) auszuwerten.

2. Sensormodul (100) nach Anspruch 1, **dadurch gekennzeichnet, dass** eine Sensorfläche (110a) der Regensensoreinheit (110) und eine Sensorfläche (120a) des Richtungssensors (120) in derselben Ebene, insbesondere im Bereich einer Oberfläche eines Gehäuses des Sensormoduls (100), angeordnet sind.

3. Sensormodul (100) nach einem der vorstehenden Ansprüche, **dadurch gekennzeichnet, dass** es integrierbar ist in einen Spiegelfuß und/oder eine Halteplatte eines an der Windschutzscheibe (210) anzubringenden Spiegels.

4. Sensormodul (100) nach einem der vorstehenden Ansprüche, **dadurch gekennzeichnet, dass** der Richtungssensor (120) dazu ausgebildet ist, die Richtung einfallender Lichtstrahlen in mindestens zwei, vorzugsweise zueinander im Wesentlichen senkrechten, Ebenen zu ermitteln.

5. Sensormodul (100) nach Anspruch 1, **dadurch gekennzeichnet, dass** das Sensormodul (100) und/oder der Richtungssensor (120) dazu ausgebildet ist, in Abhängigkeit der Auswertung der Trajektorie (T1, .., T5) darauf zu schließen, dass es sich bei der Lichtquelle um ein entgegenkommendes, insbesondere auf Kollisionskurs befindliches, Fahrzeug und/oder ein vorbeifahrendes Fahrzeug und/oder um stationäre Objekte wie z.B. Fahrbahnbeleuchtungen und/oder Verkehrsschilder handelt.

6. Sensormodul (100) nach einem der Ansprüche 1 oder 5, **dadurch gekennzeichnet, dass** das Sensormodul (100) und/oder der Richtungssensor (120) dazu ausgebildet ist, die Ergebnisse der Auswertung mit Daten weiterer Systeme des Kraftfahrzeugs, insbesondere mit Lenkwinkeldaten und/oder Geschwindigkeitsdaten und/oder Abstandsdaten eines Hinderniserfassungssystems und dergleichen abzugleichen und/oder zu plausibilisieren.

7. Sensormodul (100) nach einem der Ansprüche 1, 5 oder 6, **dadurch gekennzeichnet, dass** das Sensormodul (100) und/oder der Richtungssensor (120) dazu ausgebildet ist, in Abhängigkeit der Ergebnisse der Auswertung ein System zur Leuchtweitenregulierung und/oder ein Fernlicht anzusteuern.

8. Sensormodul (100) nach einem der vorstehenden Ansprüche, **dadurch gekennzeichnet, dass** der Richtungssensor (120) dazu ausgebildet ist, ein von ihm verarbeitetes Helligkeitssignal mit vergleichbaren Signalen anderer Sensoren abzugleichen.

9. Sensormodul (100) nach einem der vorstehenden Ansprüche, **dadurch gekennzeichnet, dass** der Richtungssensor (120) und/oder der Regensensor (110) dazu ausgebildet ist, Signale eines auf Infrarotstrahlung basierenden Fernbedienungssenders zu empfangen und/oder auszuwerten.

10. Verfahren zum Betreiben eines Sensormoduls (100) mit einer Regensensoreinheit (110) zur Erkennung von Regentropfen und/oder Feuchtigkeit, insbesondere im Bereich einer Windschutzscheibe (210) eines Kraftfahrzeugs (200), wobei in das Sensormodul (100) ein optischer Richtungssensor (120) integriert ist, der eine Einfallsrichtung von auf den Richtungssensor (120) auftreffenden elektromagnetischen Wellen, insbesondere Lichtstrahlen, ermittelt, **dadurch gekennzeichnet, dass** der Richtungssensor (120) einen zeitlichen Verlauf der Richtung einfallender Lichtstrahlen ermittelt, wodurch mindestens eine Trajektorie (T1, .., T5) einer die Lichtstrahlen aussendenden Lichtquelle erhalten wird, und dass das Sensormodul (100) und/oder der Richtungssensor (120) die Trajektorie (T1, .., T5) auswertet.

11. Verfahren nach Anspruch 10, **dadurch gekennzeichnet, dass** der Richtungssensor (120) die Richtung einfallender Lichtstrahlen in mindestens zwei, vorzugsweise zueinander im Wesentlichen senkrechten, Ebenen ermittelt.

12. Verfahren nach Anspruch in, **dadurch gekennzeichnet, dass** das Sensormodul (100) und/oder der Richtungssensor (120) in Abhängigkeit der Auswertung der Trajektorie (T1, .., T5) darauf schließt, dass es sich bei der Lichtquelle um ein entgegenkommendes, insbesondere auf Kollisionskurs befindliches, Fahrzeug und/oder ein vorbeifahrendes Fahrzeug und/oder um stationäre Objekte wie z.B. Fahrbahnbeleuchtungen und/oder Verkehrsschilder handelt.

13. Verfahren nach einem der Ansprüche 10 oder 12, **dadurch gekennzeichnet, dass** das Sensormodul (100) und/oder der Richtungssensor (120) die Ergebnisse der Auswertung mit Daten weiterer Systeme des Kraftfahrzeugs, insbesondere mit Lenkwinkeldaten und/oder Geschwindigkeitsdaten und/oder Abstandsdaten eines Hinderniserfassungssystems und dergleichen abgleicht und/oder plausibilisiert.

14. Verfahren nach einem der Ansprüche 10, 12 oder 13, **dadurch gekennzeichnet, dass** das Sensormodul (100) und/oder der Richtungssensor (120) in Abhängigkeit der Ergebnisse der Auswertung ein System zur Leuchtweitenregulierung und/oder ein Fernlicht ansteuert.

15. Verfahren nach einem der Ansprüche 10 bis 14, **dadurch gekennzeichnet, dass** der Richtungssensor (120) ein von ihm verarbeitetes Helligkeitssignal mit vergleichbaren Signalen anderer Sensoren abgleicht.

16. Verfahren nach einem der Ansprüche 11 bis 15, **dadurch gekennzeichnet, dass** der Richtungssensor (120) und/oder der Regensensor (110) Signale eines auf Infrarotstrahlung basierenden Fernbedienungssenders empfängt und/oder auswertet.

## Claims

1. Sensor module (100) having a rain sensor unit (110) for detecting raindrops and/or moisture, in particular in the region of a windscreen (210) of a motor vehicle (200), an optical direction sensor (120) being integrated in the sensor module (100) and being designed to determine a direction of incidence of electromagnetic waves, in particular light beams, impinging on the direction sensor (120), **characterized in that** the direction sensor (120) is designed to determine a temporal profile of the direction of incident light beams, thus obtaining at least one trajectory (T1, .., T5) of a light source emitting the light beams, and the sensor module (100) and/or the direction sensor (120) is/are designed to evaluate the trajectory (T1, .., T5).

2. Sensor module (100) according to Claim 1, **characterized in that** a sensor surface (110a) of the rain sensor unit (110) and a sensor surface (120a) of the direction sensor (120) are arranged in the same plane, in particular in the region of a surface of a housing of the sensor module (100).

3. Sensor module (100) according to one of the preceding claims, **characterized in that** it can be integrated in a mirror base and/or a holding plate of a mirror to be fitted to the windscreen (210).

4. Sensor module (100) according to one of the preceding claims, **characterized in that** the direction sensor (120) is designed to determine the direction of incident light beams in at least two planes, preferably planes which are substantially perpendicular to one another.

5. Sensor module (100) according to Claim 1, **characterized in that** the sensor module (100) and/or the direction sensor (120) is/are designed to infer, on the basis of the evaluation of the trajectory (T1, .., T5), that the light source is an oncoming vehicle, in particular a vehicle on a collision course, and/or a passing vehicle and/or stationary objects, for example road lighting systems and/or traffic signs.

6. Sensor module (100) according to one of Claims 1 to 5, **characterized in that** the sensor module (100) and/or the direction sensor (120) is/are designed to adjust and/or check the plausibility of the evaluation results using data from other systems in the motor vehicle, in particular using steering angle data and/or speed data and/or distance data from an obstacle detection system and the like.

7. Sensor module (100) according to one of Claims 1, 5 and 6, **characterized in that** the sensor module (100) and/or the direction sensor (120) is/are designed to control a headlight range control system and/or a main beam on the basis of the evaluation results.

8. Sensor module (100) according to one of the preceding claims, **characterized in that** the direction sensor (120) is designed to adjust a brightness signal processed by it using comparable signals from other sensors.

9. Sensor module (100) according to one of the preceding claims, **characterized in that** the direction sensor (120) and/or the rain sensor (110) is/are designed to receive and/or evaluate signals from a remote control transmitter based on infrared radiation.

10. Method for operating a sensor module (100) having a rain sensor unit (110) for detecting raindrops and/or moisture, in particular in the region of a windscreen (210) of a motor vehicle (200), an optical direction sensor (120) being integrated in the sensor module (100) and determining a direction of incidence of electromagnetic waves, in particular light beams, impinging on the direction sensor (120), **characterized in that** the direction sensor (120) determines a temporal profile of the direction of incident light beams, thus obtaining at least one trajectory (T1, .., T5) of a light source emitting the light beams, and **in that** the sensor module (100) and/or the direction sensor (120) evaluate(s) the trajectory (T1, .., T5).

11. Method according to Claim 10, **characterized in that** the direction sensor (120) determines the direction of incident light beams in at least two planes, preferably planes which are substantially perpendicular to one another.

12. Method according to Claim 10, **characterized in that** the sensor module (100) and/or the direction sensor (120) infer(s), on the basis of the evaluation of the trajectory (T4, .., T5), that the light source is an oncoming vehicle, in particular a vehicle on a collision course, and/or a passing vehicle and/or stationary objects, for example road lighting systems and/or traffic signs.

13. Method according to either of Claims 10 and 12, **characterized in that** the sensor module (100) and/or the direction sensor (120) adjust(s) and/or check(s) the plausibility of the evaluation results using data from other systems in the motor vehicle, in particular using steering angle data and/or speed data and/or distance data from an obstacle detection system and the like.

14. Method according to one of Claims 10, 12 and 13, **characterized in that** the sensor module (100) and/or the direction sensor (120) control(s) a headlight range control system and/or a main beam on the basis of the evaluation results.

15. Method according to one of Claims 10 to 14, **characterized in that** the direction sensor (120) adjusts a brightness signal processed by it using comparable signals from other sensors.

16. Method according to one of Claims 11 to 15, **characterized in that** the direction sensor (120) and/or the rain sensor (110) receive(s) and/or evaluate(s) signals from a remote control transmitter based on infrared radiation.

## Revendications

1. Module capteur (100) avec une unité capteur de pluie (110) pour l'identification de gouttes de pluie et/ou d'humidité, notamment dans la région d'un pare-brise (210) d'un véhicule automobile (200), un capteur optique de direction (120), intégré dans le module capteur (100), étant conçu pour déterminer une direction incidente d'ondes électromagnétiques tombant sur le capteur de direction (120), notamment des rayons lumineux, **caractérisé en ce que** le capteur de direction (120) est conçu pour déterminer un déroulement temporel de la direction de rayons lumineux incidents, ce qui permet d'obtenir au moins une trajectoire (T1, ..., T5) d'une source lumineuse émettant les rayons lumineux, et le module capteur (100) et/ou le capteur de direction (120) étant conçus pour exploiter la trajectoire (T1, ..., T5).

2. Module capteur (100) selon la revendication 1, **caractérisé en ce qu'**une surface de capteur (110a) de l'unité capteur de pluie (110) et une surface de capteur (120a) du capteur de direction (120) sont disposées dans le même plan, notamment dans la région d'une surface d'un boîtier du module capteur (100).

3. Module capteur (100) selon une des revendications précédentes, **caractérisé en ce qu'**il peut être intégré dans une embase de rétroviseur et/ou une plaque de support d'un rétroviseur à fixer sur le pare-brise (210).

4. Module capteur (100) selon une des revendications précédentes, **caractérisé en ce que** le capteur de direction (120) est conçu pour déterminer la direction de rayons lumineux incidents dans au moins deux plans, de préférence perpendiculaires l'un par rapport à l'autre pour l'essentiel.

5. Module capteur (100) selon la revendication 1, **caractérisé en ce que** le module capteur (100) et/ou le capteur de direction (120) sont conçus pour conclure en fonction de l'exploitation de la trajectoire (T1, ..., T5), que la source lumineuse concerne un véhicule arrivant en face, se trouvant notamment sur une trajectoire de collision, et/ou un véhicule croisant et/ou des objets statiques comme par exemple des éclairages de la chaussée et/ou des panneaux indicateurs.

6. Module capteur (100) selon une des revendications 1 ou 5, **caractérisé en ce que** le module capteur (100) et/ou le capteur de direction (120) sont conçus pour recouper et/ou pour évaluer la vraisemblance des résultats de l'exploitation avec des données d'autres systèmes du véhicule automobile, notamment avec des données d'angle de braquage et/ou des données de vitesse et/ou des données de distance d'un système de saisie d'obstacles et similaires.

7. Module capteur (100) selon une des revendications 1, 5 ou 6, **caractérisé en ce que** le module capteur (100) et/ou le capteur de direction (120) sont conçus pour commander un système de régulation de la distance d'éclairage et/ou les feux de route en fonction des résultats de l'exploitation.

8. Module capteur (100) selon une des revendications précédentes, **caractérisé en ce que** le capteur de direction (120) est conçu pour recouper un signal de clarté qu'il a traité avec des signaux comparables d'autres capteurs.

9. Module capteur (100) selon une des revendications précédentes, **caractérisé en ce que** le capteur de direction (120) et/ou le capteur de pluie (110) sont conçus pour recevoir et/ou exploiter des signaux d'un émetteur de télécommande basé sur le rayonnement infrarouge.

10. Procédé de fonctionnement d'un module capteur (100) avec une unité capteur de pluie (110) pour l'identification de gouttes de pluie et/ou d'humidité, notamment dans la région d'un pare-brise (210) d'un véhicule automobile (200), un capteur optique de direction (120) étant intégré dans le module capteur (100) pour déterminer une direction incidente d'ondes électromagnétiques tombant sur le capteur de direction (120), notamment des rayons lumineux, **caractérisé en ce que** le capteur de direction (120) détermine un déroulement temporel de la direction de rayons lumineux incidents, ce qui permet d'obtenir au moins une trajectoire (T1, ..., T5) d'une source lumineuse émettant les rayons lumineux, et **en ce que** le module capteur (100) et/ou le capteur de direction (120) exploitent la trajectoire (T1, ..., T5).

11. Procédé selon la revendication 10, **caractérisé en ce que** le capteur de direction (120) détermine la direction de rayons lumineux incidents dans au moins deux plans, de préférence perpendiculaires l'un par rapport à l'autre pour l'essentiel.

12. Procédé selon la revendication 10, **caractérisé en ce que** le module capteur (100) et/ou le capteur de direction (120) concluent en fonction de l'exploitation de la trajectoire (T1, ..., T5), que la source lumineuse concerne un véhicule arrivant en face, se trouvant notamment sur une trajectoire de collision, et/ou un véhicule croisant et/ou des objets statiques comme par exemple des éclairages de la chaussée et/ou des panneaux indicateurs.

13. Procédé selon une des revendications 10 ou 12, **caractérisé en ce que** le module capteur (100) et/ou le capteur de direction (120) recoupent et/ou évaluent la vraisemblance des résultats de l'exploitation avec des données d'autres systèmes du véhicule automobile, notamment avec des données d'angle de braquage et/ou des données de vitesse et/ou des données de distance d'un système de saisie d'obstacles et similaires.

14. Procédé selon une des revendications 10, 12 ou 13, **caractérisé en ce que** le module capteur (100) et/ou le capteur de direction (120) commande un système de régulation de la distance d'éclairage et/ou les feux de route en fonction des résultats de l'exploitation.

15. Procédé selon une des revendications 10 à 14, **caractérisé en ce que** le capteur de direction (120) recoupe un signal de clarté qu'il a traité avec des signaux comparables d'autres capteurs.

16. Procédé selon une des revendications 11 à 15, **caractérisé en ce que** le capteur de direction (120) et/ou le capteur de pluie (110) reçoit et/ou exploite des signaux d'un émetteur de télécommande basé sur le rayonnement infrarouge.
